# EUROPÄISCHE PATENTSCHRIFT

(11) **EP 2 765 033 B1**
(45) Veröffentlichungstag und Bekanntmachung des Hinweises auf die Patenterteilung: **04.01.2017**
(21) Anmeldenummer: 14000495.3
(22) Anmeldetag: 12.02.2014
(51) Int. Cl.: B60R 13/02

(54) **Funktionale Überbrückung von Dekoröffnungen**
Functional bridging of decoration openings
Enjambement fonctionnel d'ouvertures décoratives

(30) Priorität: 12.02.2013 DE 102013202224
(43) Veröffentlichungstag der Anmeldung: 13.08.2014
(73) Patentinhaber: Lisa Dräxlmaier GmbH, 84137 Vilsbiburg (DE)
(72) Erfinder: Schlemmer, Christian, 84034 Landshut (DE)

(56) Entgegenhaltungen:
- WO-A1-2004/078518
- WO-A1-2013/049560
- US-B1- 6 206 533

## Beschreibung

### TECHNISCHES GEBIET

Die Erfindung betrifft ein Interieurteil mit einem oder mehreren Dekorelementen und einer Öffnung in den oder zwischen den Dekorelementen, wobei in die Öffnung ein Füllmaterial eingebracht ist.

### HINTERGRUND DER ERFINDUNG

Interieurteile von Fahrzeuginnenräumen können Spalte und andere Öffnungen aufweisen, die beispielsweise dadurch zustande kommen, dass zwei Dekorelemente aneinander gefügt werden. Eine funktionale Nutzung solcher Öffnung findet bisher kaum statt.

Es ist bekannt, Lichtleiter mittels einer Befestigungsfahne mit Dekoren zu vernähen. Die US 2010/0296302 A1 beschreibt diesbezüglich eine Interieurkomponente, in der ein Streifen aus einem lichtleitenden Polymermaterial mit einer Interieurkomponente vernäht ist.

Alternativ können Öffnungen oder Spalte durch Ziernähte gestalterisch hervorgehoben werden, wie dies in hochwertigen Interieurausstattungen von Fahrzeugen der oberen Mittelklasse und Oberklasse gängige Praxis ist. So beschreibt beispielsweise die WO 2004/078518 A1 ein Innenausstattungsteil, das über einen in die Oberfläche integrierten Lichtleiter verfügt und somit bei eingeschalteter Beleuchtung die Kontur des Innenausstattungsteils hervorgehoben wird.

Alternativ oder zusätzlich dazu ist es üblich, das Abstandsmaß in Fügebereichen, etwa zwischen zwei Dekorelementen, zu minimieren.

Eine funktionale und über die obigen Maßnahmen hinausgehende optische Nutzung von Spalten und anderen Öffnungen in Dekoroberflächen von Fahrzeuginterieurteilen findet hingegen bisher nicht oder nur wenig statt. Insbesondere spielt eine Kombination aus optischen und funktionalen Aspekten beim Überbrücken oder Füllen der oben beschriebenen Öffnungen keine Rolle.

### KURZE BESCHREIBUNG DER ERFINDUNG

Eine Aufgabe der Erfindung besteht darin, ein Interieurteil mit einem oder mehreren Dekorelementen anzugeben, bei dem eine Öffnung im Dekorelement auf funktionale und/oder optisch innovative Art und Weise überbrückt oder gefüllt wird.

Die Aufgabe wird mit einem Interieurteil gemäß Anspruch 1 gelöst. Vorteilhafte Ausgestaltungen sind in den abhängigen Ansprüchen definiert und ergeben sich auch aus der folgenden allgemeinen Beschreibung der Erfindung, sowie der Beschreibung spezieller Ausführungsformen.

Das erfindungsgemäße Interieurteil weist ein oder mehrere Dekorelemente und eine Dekoröffnung in dem einen oder zwischen den mehreren Dekorelementen auf. In die Dekoröffnung ist ein Füllmaterial eingebracht, dessen Querschnitt verformbar ist und das ein Kernelement, eine Abstandstruktur und eine Hülle aufweist. Durch die Verformbarkeit des Querschnitts kann sich das Füllmaterial an verschiedene Öffnungsgeometrien anpassen, wodurch beispielsweise herstellungsbedingte Schwankungen im Spaltmaß auf elegante Art und Weise ausgeglichen und optisch versteckt werden können. Dazu ist der Querschnitt des Füllmaterials zumindest teilweise komprimierbar und erweiterbar. Vorzugsweise wird die Komprimierbarkeit des Füllmaterials vollständig oder hauptsächlich über die Abstandsstruktur vermittelt. Dazu weist die Abstandsstruktur eine gewisse Dicke auf, die vorzugsweise über der Dicke der Hülle liegt.

Die Hülle ist zumindest abschnittsweise transparent, sodass die Abstandsstruktur zumindest teilweise von außen sichtbar ist. Wenn in der vorliegenden Anmeldung von "transparent" die Rede ist, ist damit eine Teiltransparenz, mit der beispielsweise nur bestimmte Farben oder nur ein bestimmter Prozentsatz der Lichtintensität durchgelassen wird, mitumfasst. Die Abstandsstruktur ist zumindest teilweise transparent.

Darüber hinaus weist die Abstandsstruktur eine Komprimierbarkeit auf, die vorzugsweise größer als die der Hülle und/oder des Kernelements ist. Über die Verformbarkeit des Querschnitts findet nicht nur eine Anpassbarkeit an unterschiedliche Spaltmaße statt, sondern Druck- und Zugbelastungen, die beispielsweise aufgrund von Temperaturänderungen oder Alterungsprozessen der Materialien bewirkt werden, können mit dem erfindungsgemäßen Überbrückungsmaterial ausgeglichen werden, sodass die oben beschriebenen Abstandsänderungen optisch versteckt werden, d.h. im Vergleich ohne Füllmaterial weniger auffallen. Die beschriebene Flexibilität des Füllmaterials rührt vorzugsweise in erster Linie von der Abstandsstruktur her, die das Kernelement zumindest abschnittsweise umgibt. Die Abstandsstruktur kann das Kernelement vollständig umgeben oder in axialer Richtung und/oder radialer Richtung nur abschnittsweise vorgesehen sein. Die Abstandsstruktur wird wiederrum teilweise oder vollständig von der Hülle umgeben.

Somit beabstandet die Abstandsstruktur die Hülle von dem Kernelement. Der Abstand zwischen Hülle und Kernelement beträgt hierbei abschnittsweise bevorzugt zumindest wenigstens 0,5 mm, noch bevorzugter 1 mm. Die Abstandsstruktur fungiert somit als Abstandshalter, wobei der beanspruchte Mindestabstand sich auf den Zustand bezieht, in dem keine äußeren Kräfte auf das Füllmaterial komprimierend einwirken, d.h. auf den nicht komprimierten Zustand. Der Mindestabstand von 0,5 mm, bevorzugt 1 mm, stellt sicher, dass das erfindungsgemäße Füllmaterial die oben beschriebene Ausgleichswirkung erzielt. Besonders bevorzugt ist ein Abstand zwischen 1 mm und 5 mm, da sich in diesem Bereich eine optisch ansprechende Überbrückung von Dekoröffnungen besonders gut mit einer Funktionalisierung des Füllmaterials verbinden lässt.

Die Hülle umgibt den Kern zumindest abschnittsweise nicht konzentrisch, wodurch die Gestaltungsfreiheit des Füllmaterials erhöht wird.
Neben den oben beschriebenen Funktionen weist das Füllmaterial weitere Funktionen auf. Hierbei kommt insbesondere das Kernelement als "Funktionsträger" in Frage. Das Kernelement weist einen Lichtleiter auf oder kann der Lichtleiter selbst sein, der in Zusammenwirkung mit der Abstandsstruktur besondere optische Effekte erzeugt. In anderen Ausführungsformen ist das Kernelement ein mit einer Flüssigkeit gefüllter Schlauch, ein Heizelement usw.. Auf diese Weise findet eine synergetische Nutzung des Füllmaterials statt. Das erfindungsgemäße Füllmaterial ist auch dazu geeignet, eine oder mehrere elektrische Leitungen zu führen. Dies ist insbesondere dann sinnvoll, wenn elektrische Leitungen in der Nähe von Dekoroberflächen geführt werden sollen oder müssen. Ein Anschlussstecker für die Spannungsversorgung kann auch Bestandteil des Füllmaterials sein.

Weist das Kernelement eine Lichtquelle und/oder elektrischen Leiter auf oder ist das Kernelement ein Lichtleiter oder elektrischer Leiter, dann ist der Leiter vorzugsweise mit einer Ummantelung versehen, die eine Befestigungsfahne aufweist, welche als Abstandsstruktur fungiert oder einen Teil der Abstandsstruktur bildet. Auf diese Weise kann eine Ummantelung des Lichtleiters, die beispielsweise zum Schutz des Lichtleiters oder zur Herstellung oder Optimierung der Totalreflexionseigenschaften vorgesehen sein kann, gleichzeitig als Abstandsstruktur verwendet werden, wodurch die Ummantelung eine doppelte Funktion übernimmt. Im Falle des elektrischen Leiters kann die Abstandstruktur, mit oder ohne Befestigungsfahne, eine isolierende Funktion übernehmen.

Vorzugsweise ist die Dekoröffnung ein länglicher Spalt, wobei das Füllmaterial ebenfalls länglich ausgebildet ist. In diesem Fall ist zumindest der Querschnitt des Füllmaterials senkrecht zur Längserstreckung verformbar.

Wenn gewünscht ist, dass die Abstandsstruktur von außen sichtbar ist, dann kann der optische Eindruck dadurch verbessert werden, dass die Abstandsstruktur lichtreflektierende Flächen aufweist.

Vorzugsweise weist die Abstandsstruktur ein weiches Kunststoffmaterial auf, um die oben beschriebene Flexibilität des Füllmaterials auf einfache Weise zu realisieren.

Vorzugsweise ist das Füllmaterial nicht abgesenkt eingebracht, d.h. es ist mit der Ebene des bzw. der Dekorelemente fluchtend oder sichtseitig vorstehend in die Dekoröffnung eingebracht, wodurch die oben angesprochene gegebenenfalls unter Spannung stehende Verbindung aus Dekorelement und Füllmaterial besonders gut bewerkstelligt werden kann.

Vorzugsweise weist eines oder weisen mehrere der Dekorelemente eine Dekorschicht aus Leder, Kunstleder oder einem lederähnlichen Material auf, da die vorliegende Erfindung gerade für diese Materialien als Dekormaterialien besonders geeignet ist.

Vorzugsweise weist das Kernelement einen Schlauch auf. Der Schlauch kann ein Medium führen, etwa ein Gas oder eine Flüssigkeit. Alternativ können im Schlauch ein oder mehrere Heizelement und/oder ein oder mehrere Lichtleiter und/oder andere Lichtquellen vorgesehen sein. Wie oben dargelegt, ist das erfindungsgemäße Füllmaterial auch dazu geeignet, eine oder mehrere elektrische Leitungen zu führen.

Vorzugsweise ist ein Haltesystem aus einem elastischen/flexiblen Material vorgesehen, das in der Dekoröffnung vorgesehen ist und mit dem Dekor gefügt ist, wobei das Füllmaterial von dem Haltesystem geklemmt wird. Das Haltesystem weist vorzugsweise eine Klammer aus einem Kunststoff auf. Das Haltesystem ermöglicht eine einfache Befestigung des Füllmaterials. Insbesondere wird durch ein etwaiges Klemmen des Füllmaterials ein Austausch oder ein modulartiger Einbau eines Füllmaterials ermöglicht. Ob ein Füllmaterial eingebaut wird oder welche Beschaffenheit ein solches aufweist, kann dann auf einfache Weise, etwa gemäß einer Ausstattungsvariante des Fahrzeugs festgelegt werden. Darüber hinaus kann sich die Herstellung des Interieurteils vereinfachen, indem das Füllmaterial im Nachhinein in das Haltesystem geklemmt wird. Optional kann das Füllmaterial oder Segmente davon von der Sichtseite demontierbar bzw. austauschbar sein.

Vorzugsweise weist das Füllmaterial entlang seiner Längserstreckung einen veränderlichen Querschnitt auf. Hierbei ist eine "Veränderlichkeit" gemeint, die über den Ausgleich typischer Herstellungstoleranzen hinausgeht.

Vielmehr kann sich der Querschnitt des Füllmaterials wellenförmig erweitern und verjüngen, wodurch besondere optische Wirkungen erzielt werden können.

Vorzugsweise weist die Abstandsstruktur eine Blechhülse oder Kunststoffhülse auf, die mit Öffnungen vorgesehen ist. Die Öffnungen können in die Blechhülse eingeschnitten (z.B. Laserverfahren)oder eingestanzt sein, wobei Abschnitte entstehen, die nach oben und/oder unten gebogen sein können, wodurch auf einfache Weise eine Abstandsstruktur, ggf. mit veränderlichem Querschnitt hergestellt werden kann.

Allgemein für das Füllmaterial kommen insbesondere und vorzugsweise verformbare Duroplaste, Elastomere, Thermoplaste, vernetzte Thermoplaste, PE, PP, PVC, PUR, Glas, Metall, faserverstärkte Polymere, PMMA, PC, COC, PES in Frage.

Vorzugsweise ist die Abstandsstruktur aus Folie, Metall, Polymere, Leder, Kunstleder, einem lederähnlichen Material, Holz, Papier und/oder Textil gefertigt. Weiterhin eignen sich Gewebe und Vliesstoffe, insbesondere aus Mikrofasern und Nanofasern. Darüber hinaus kommen auch die oben genannten Materialien in Frage, d.h. verformbare Duroplaste, Elastomere, Thermoplaste, vernetzte Thermoplaste, PE, PP, PVC, PUR, Glas, Metall, PMMA, PC, COC, PES.

Vorzugsweise weist eines oder weisen mehrere der Dekorelemente am Rand der Dekoröffnung einen Umbugbereich auf. Durch den Umbugbereich wird ein optisch ansprechender, stabiler und beständiger Abschluss zur Dekoröffnung hin erzielt. Der Umbug erzeugt vorzugsweise einen vergleichsweise scharfkantigen Übergang zwischen dem Füllmaterial und dem mindestens einen Dekorelement. Mit einem scharfkantigen Umbug kann ein minimaler Spalt mit vergleichsweise wohldefinierten Abmessungen erzielt werden.

Vorzugsweise weist eines und/oder weisen mehrere Dekorelemente im Bereich der Dekoröffnung und/oder das Füllmaterial ein oder mehrere Bohrungen auf, die bei der Zusammenfügung des bzw. der Dekormaterialien mit dem Füllmaterial zum Vakuumsaugen verwendet werden.

Vorzugsweise ist auf der der Sichtseite abgewandten Seite des Interieurteils ein formstabiler Träger vorgesehen, wodurch das Interieurteil stabilisiert und für eine Weiterverarbeitung und Anbringung im Interieur eines Fahrzeugs vorbereitet wird.

Vorzugsweise ist zwischen einem oder mehreren der Dekorelemente und dem Füllmaterial ein Haftvermittler vorgesehen, um den Verbund aus Dekorelement und Füllmaterial zu stärken.

Vorzugsweise ist eine Naht vorgesehen, welche die Dekoröffnung zumindest teilweise sowie das Füllmaterial zumindest teilweise überspannt. Der Nähprozess zur Ausbildung der Naht kann durch den Druck von innen, der von der flexiblen, komprimierbaren Beschaffenheit des Füllmaterials herrührt, positiv beeinflusst werden. Es ergibt sich dadurch in technischer Hinsicht ein synergetischer Effekt zwischen dem Bestreben, eine Ziernaht zum Überspannen der Dekoröffnung sowie ein Füllmaterial zum optischen Ausfüllen der Dekoröffnung bereitzustellen. Die Überspannungziernaht kann kann auch durch Einfädeln in nebenliegende Ziernähte (neben Füllmaterial) erreicht werden.

Die Naht kann weiterhin in das Füllmaterial zumindest teilweise eingebracht sein. Vorzugsweise verläuft die Naht nur im Bereich der Hülle und in einem Bereich der Abstandsstruktur, der direkt an die Hülle angrenzt. Vorzugsweise tritt beim Nähprozess die den Nähfaden einbringende Nadel nicht mit dem Kernelement in Kontakt, so dass eine Beschädigung, Verformung oder Quetschung des Kernelements vermieden wird. Hierzu kann beispielsweise ein definierter Abstand des Nähmusters gewählt werden, so dass die Nähnadel im Bereich des Kernelements nicht in das Füllmaterial einsticht.

Besonders bevorzugt weist das Füllmaterial zumindest im Nahtbereich ein Schutzelement auf, das innerhalb des Füllmaterials angeordnet ist und das Kernelement zumindest teilweise umschließt. Das Schutzelement kann hierbei aus einem Material gefertigt sein, das eine hohe Schlagzähigkeit aufweist, wie beispielsweise ein Metall.

Insbesondere bei Lederausstattungen in Fahrzeugen oder Ausstattungen mit lederähnlichen Materialien findet ein Spiel zwischen benachbarten Dekorelementen statt, sodass ein ausgesprochen exaktes und dauerhaftes Spaltmaß nicht oder nur sehr schwierig zu bewerkstelligen ist. Eine Abstandsänderung kann beispielsweise durch das innenliegende Material erfolgen, das sich unter Temperatur und Druck oder anderen äußeren Einflüssen weiten und zusammenziehen kann. Die Elastizität des Füllmaterials ermöglicht eine optimale Anpassung an den Zwischenraum und eine unter Spannung gesetzte Unterstützung durch die Naht. Die Überbrückung weitet sich und setzt die Naht unter Spannung. Dabei kann sich die Naht durchaus in das Überbrückungsmaterial eindrücken.

Eine besondere Funktionalisierung liegt in der Kombination des Füllmaterials mit der Naht. Sie kann als Licht- und/oder Tastführung dienen, wobei diesbezüglich weitere Strukturelemente eingebracht werden können, etwa zur Akzentuierung zum umliegenden Dekormaterial. Darüber hinaus findet ein Verschließen der Dekoröffnung auf elegante Art und Weise statt, sowie ein Verbinden von Dekorelementen, gegebenenfalls mit einem spaltreduzierten Übergang. Gegebenenfalls können Falten mit dem Füllmaterial in die Dekoröffnung bzw. den Spalt eingebracht werden. Das Füllmaterial kann als weiteren Aspekt einen Memory-Effekt bezüglich seiner Form aufweisen.

Vorzugsweise weisen ein, mehrere oder alle Materialien des Füllmaterials eine glasklare Transparenz auf, wodurch eine ausgeprägte Lichtbrillanz oder Lichtschärfe erzielt wird.

Wenngleich die vorliegende Erfindung anhand eines Interieurteils für ein Automobil erläutert wurde, versteht es sich, dass die Erfindung auch in anderen Bereichen umgesetzt werden kann, zum Beispiel in der Luftfahrt und der Schifffahrt, im Möbelbau, in der Haustechnik usw.. Darüber hinaus sind weitere Vorteile und Merkmale der vorliegenden Erfindung aus der folgenden Beschreibung bevorzugter Ausführungsformen ersichtlich. Die dort beschriebenen Merkmale können alleinstehend oder in Kombination mit einem oder mehreren der oben erwähnten Merkmale umgesetzt werden, insofern sich die Merkmale nicht widersprechen. Die folgende Beschreibung der bevorzugten Ausführungsformen erfolgt dabei unter Bezugnahmen auf die begleitenden Zeichnungen.

### KURZE BESCHREIBUNG DER ZEICHNUNGEN

Figur 1 zeigt schematisch den Querschnitt durch ein Interieurteil mit einer Dekoröffnung, in die ein Füllmaterial eingebracht ist.
Figuren 2a bis 2c zeigen Abwandlungen der grundlegenden Anordnung, die in Figur 1 gezeigt ist.
Figur 3 zeigt unterschiedliche Arten und Ausführungen von Dekoröffnungen in einem Interieurteil.
Figur 4 zeigt den Querschnitt durch ein Interieurteil mit einer Dekoröffnung, wobei hier der Fokus auf dem Umbug in der Nähe der Öffnung liegt.
Figuren 5a und 5b zeigen Beispiele eines Füllmaterials.
Figuren 6a bis 6f zeigen Beispiele eines Füllmaterials mit in Längsrichtung veränderlicher Abstandsstruktur.
Figuren 7a bis 7c zeigen Führungs- und Einbettungsvarianten des Füllmaterials.
Figuren 8a, 8b und 9 zeigen weitere Ausführungsbeispiele des Füllmaterials.
Figur 10 zeigt weitere Strukturen für die Abstandsstruktur des Füllmaterials.
Figuren 11a und 11b zeigen die Einbettung eines Füllmaterials in eine Dekoröffnung.
Figur 12 zeigt ein Ausführungsbeispiel eines Füllmaterials in Längsrichtung.
Figuren 13a bis 13d zeigen Dekorzuschnitte im Bereich eines einzubettenden Füllmaterials.
Figuren 14a bis 14d zeigen weitere Ausführungsvarianten der Abstandsstruktur für ein Füllmaterial.
Figuren 15a bis 15c zeigen sichtbare und unsichtbare Halte-/Kompressionssysteme für Füllmaterialien.
Figuren 16a bis 16e sind Draufsichten auf eingebettete Füllmaterialien.
Figur 17 zeigt eine weitere Ausführungsvariante eines Füllmaterials.

### WEGE ZUR AUSFÜHRUNG DER ERFINDUNG

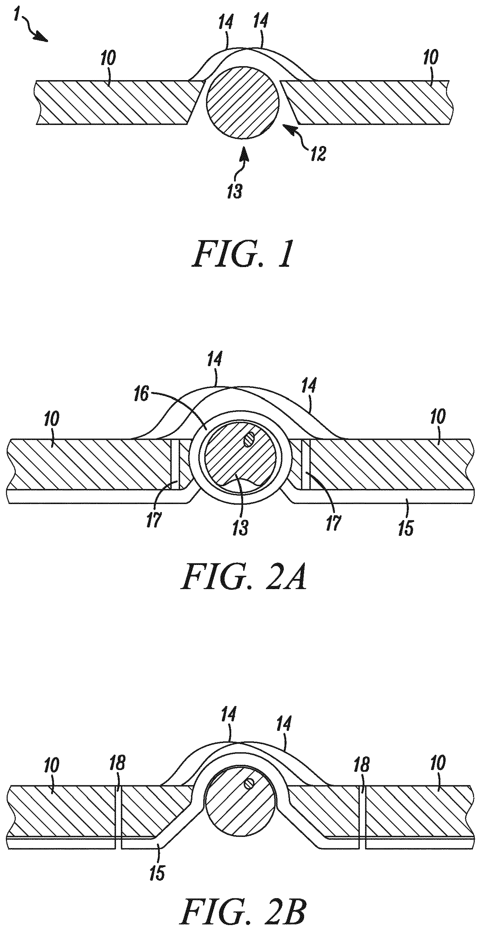

Figur 1 zeigt einen Querschnitt durch ein Interieurteil 1, das zwei Dekorelemente 10 mit einer spaltförmigen Öffnung 12 dazwischen oder ein Dekorelement 10 mit einer Öffnung 12 aufweist. In die Öffnung 12 ist ein Füllmaterial 13 eingebracht, dessen innere Struktur aus der Figur 1 nicht hervorgeht. Wenngleich es in der Figur 1 nicht gezeigt ist, ist das Füllmaterial 13 so verformbar, dass dieses in dem dargestellten Querschnitt, also dem Querschnitt senkrecht zu seiner Längserstreckung, komprimierbar und erweiterbar ist. Das Füllmaterial 13 könnte etwa das Verhalten eines Gummischlauchs aufweisen. Darüber hinaus ist eine Naht 14 vorgesehen, die die Lücke 12 und das Füllmaterial 13 überspannt. Dass die beteiligten Elemente (Dekorelement, Füllmaterial, Naht) bevorzugt gegenseitig unter Spannung stehen, geht aus der Figur 1 zur besseren Darstellung der einzelnen Elemente nicht hervor.

In dem obigen Beispiel der Figur 1 sind die Dekorelemente 10 einschichtig vorgesehen, diese können etwa aus Leder gefertigt sein. Allerdings versteht es sich, dass die Dekorelemente 10 mehrschichtig, etwa als Verbund ausgebildet sein können, wobei beispielsweise eine Dekorschicht mit einer Haptikschicht und einer Trägerschicht oder eine Dekorschicht mit einer Trägerschicht jeweils gemeinsam das Dekorelement 10 bilden können.

Die Figuren 2a bis 2d zeigen Abwandlungen der Grundstruktur der Figur 1.

In Figur 2a wird der in Figur 1 beschriebene Aufbau um ein Überbrückungsmaterial 15 ergänzt, das das Füllmaterial 13 auf der Rückseite, d.h. auf der der Sichtseite abgewandten Seite des Interieurteils 1 überbrückt, fixiert und befestigt. Das Überbrückungsmaterial 15 umgibt das Füllmaterial 13 auf der Rückseite teilweise. Darüber hinaus ist ein zweites Überbrückungsmaterial 16 vorgesehen, das das Füllmaterial 13 seitlich und auf der Oberseite umgibt. Eines oder mehrere der Überbrückungsmaterialien 15, 16 können mit einem sog. Memory-Effekt ausgestattet sein, wodurch die Anpassbarkeit an die Abmessungen der Öffnung 12 und die Dauerhaftigkeit des Verbunds verbessert werden kann. Darüber hinaus sind in Figur 2a Bohrungen 17 gezeigt, die zur Verbesserung der Vakuumansaugung während der Herstellung des Verbunds vorgesehen sind. Es sei darauf hingewiesen, dass in den hier gezeigten Ausführungsformen die Naht 14 sowohl eine Ziernaht ist, als auch als Funktionsnaht zum Überbrücken der Öffnung 12 und Verbinden der die Öffnung 12 umgebenden Ränder des Dekorelements 10 bzw. der Dekorelemente 10 dient. Zusätzlich können die Dekorelemente 10 verklebt oder anderweitig miteinander verbunden werden.

In den in den Figuren 1 und 2a bis 2d gezeigten Ausführungsformen befindet sich das Füllmaterial 13 in einem Hohlprofil, das wie oben angedeutet Gedächtniseigenschaften (Memory-Effekt) aufweisen kann. Diese Gedächtniseigenschaften sorgen dafür, dass das Füllmaterial 13 zwischen den zwei Dekorelementen 10 bzw. in der Öffnung 12 des Dekorelements 10 eingeklemmt wird. Darüber hinaus kann das Füllmaterial 13 gegen die Naht 14 gedrückt werden, was sich nicht nachteilig auf die Befestigung auswirkt. Zusätzlich können Abstandselemente vorgesehen sein, welche die Bewegung mitgehen.

In der Figur 2b geht das Überbrückungsmaterial 15 "oben" am Füllmaterial 13 vorbei, d.h. das Überbrückungsmaterial 15 ist auf der Sichtseite des Füllmaterials 13 vorgesehen. In diesem Fall kann das Überbrückungsmaterial 15 zumindest teilweise transparent sein, sodass das Füllmaterial 13 zumindest teilweise sichtbar ist. Darüber hinaus sind in der Figur 2b Ziernähte 18 vorgesehen. In der gezeigten Ausführungsform dienen die Ziernähte 18 außerdem zur Befestigung des Überbrückungsmaterials 15 an dem Dekorelement 10, sie sind in dieser Hinsicht funktionalisiert.

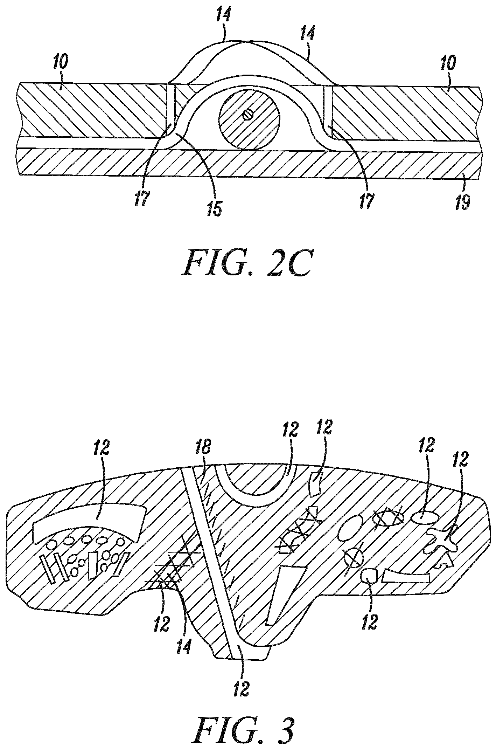

Der Aufbau der Figur 2c ähnelt dem der Figur 2b, wobei zusätzlich ein Lichtleiter 19 vorgesehen ist, der das Füllmaterial 13, das ebenfalls einen Lichtleiter aufweisen kann, mit Licht versorgt. Weitere Variante, 19 ist eine Lichtquelle und Füllmaterial 13 beinhaltet eine Lichtquelle, Lichtquellen und/oder Lichtleiter.

Die Figur 3 zeigt schematisch die Draufsicht, d.h. die Dekorseite einer Instrumententafel mit Überbrückung von Dekoröffnungen 12. Verschiedene Geometrien von Dekoröffnungen 12 bzw. Spalten 12 sind gezeigt. Darüber hinaus sind Funktionsnähte und Ziernähte 14 und 18 gezeigt.

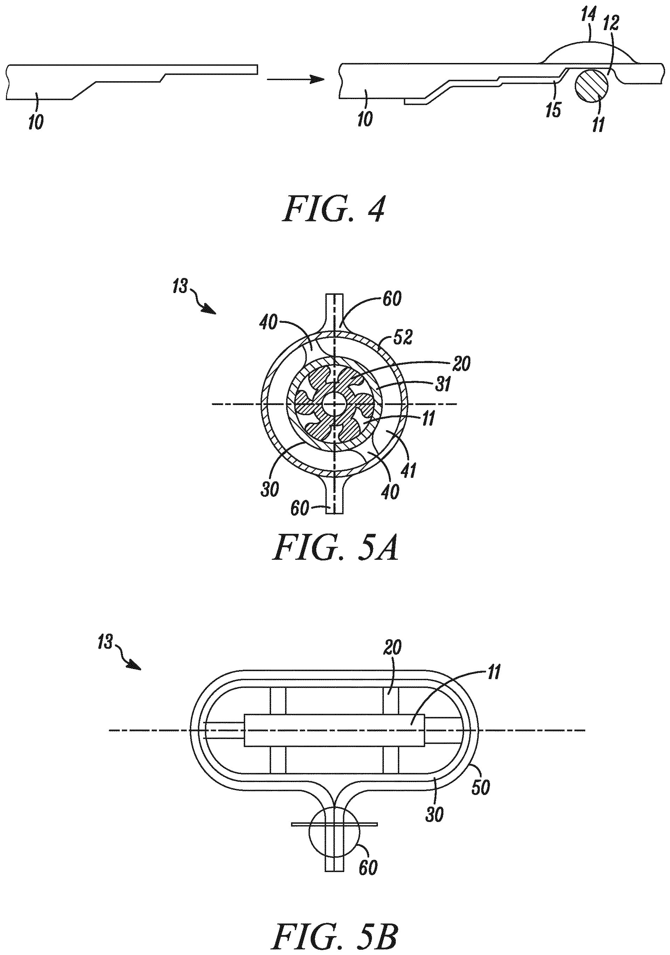

Figur 4 zeigt den Umbug eines Dekorelements 10. Zur Dekoröffnung 12 hin ist eine Verjüngung der Dicke des Dekorelements 10 vorgesehen. Diese kann stufenweise, wie es in der Figur 4 gezeigt ist, oder kontinuierlich erfolgen. Dadurch lässt sich, wie es auf der rechten Seite der Figur 4 gezeigt ist, ein scharfkantiger Umbug mit vergleichsweise exakten Abmessungen und dadurch minimalem Spaltmaß herstellen. Der Übergang des Füllmaterials 13 zum Dekor soll so klein wie möglich sein, um trotz Umbug keine Schmutzfuge entstehen zu lassen.

Für alle Ausführungsformen gilt, dass die Dicke der einzelnen Schichten, insbesondere des Dekormaterials, je nach Art des verwendeten Materials und der angestrebten Beschaffenheit des Interieurteils unterschiedlich sein kann. Foliendicken, Textildicken oder Lederschichtdicken im Bereich von 20 µm bis 2 mm, bevorzugt im Bereich von 0,05 mm bis 0,6 mm sind wünschenswert. Die Dickenangaben gelten auch für das Überbrückungsmaterial 15, dass zumindest teilweise zum Dekormaterial wird.

Geeignete Materialien zur Herstellung des Überbrückungsmaterials oder der Überbrückungsmaterialien 15, 16 sind Leder, Textil, Vlies, Holz, Papier, Metall, Polymere Metallimitationen, Glas, Naturfaser, Folien mit ohne Lichtfunktionsbedruckung, Folien mit/ohne Füllstoffe für optische Akzente (Reflexionen, Lichtfarbverschiebungen ) bei Lichtdurchstrahlung und Lichtbestrahlung) verursachen Naturfaserverbundmaterialien, geschichtete Materialien, lichttransparente Materialien oder Kombinationen davon. Das Überbrückungsmaterial oder die Überbrückungsmaterialien 15, 16 können als Formteile, Profile, Armierungsmaterialien, aufblasbare Materialien oder als Kombination davon gestaltet sein.

Die Figuren 5a und 5b zeigen zwei verschiedene Querschnitte durch ein Füllmaterial 13, das ein Kernelement 11, beispielsweise einen Lichtleiter, und eine Abstandsstruktur 20 aufweist. Die Abstandsstruktur 20 umgibt das Kernelement 11. Die Abstandsstruktur 20 wird von einer Hülle 30 umgeben, an der in der Figur 5a wiederum zusätzliche Abstandshalter 40 vorgesehen sind, die eine zweite Hülle 50 auf Abstand halten. Im vorliegenden Beispiel werden Überstände an den Fügestellen der Hülle 30 als zusätzliche Abstandshalter 40 verwendet. Die Fügestellen 60 der äußeren Hülle 50 können etwa als Abstandshalter für eine weitere Hülle oder als Befestigungsmittel, etwa zum Vernähen des Füllmaterials 13 mit den in den Figuren 5a und 5b nicht dargestellten Dekorelementen benutzt werden. Im vorliegenden Ausführungsbeispiel ist in der Hülle 30 eine Öffnung 31 vorgesehen, welche beispielsweise zur Erzeugung besonderer optischer Effekte gedacht ist. Eine oder mehrere der dargestellten Hüllen 30, 50 können transparent oder zumindest teiltransparent sein. Alternativ sind eine oder mehrere Öffnungen, wie die Öffnung 31, vorgesehen, um einen Einblick in das Innere des Füllmaterials 13 zu ermöglichen, insbesondere dann, wenn das Füllmaterial 13 mit einem Lichtleiter zur Erzeugung optischer Effekte oder zur Beleuchtung vorgesehen ist. Aus den Figuren 5a und 5b ist ersichtlich, dass die Abstandsstruktur 20 geometrisch ganz unterschiedliche Formen aufweisen kann. Es ist beispielsweise weder erforderlich, dass die Abstandsstruktur 20 symmetrisch um das Kernelement 11 vorgesehen ist, noch das Füllmaterial 13 kreissymmetrisch im Querschnitt sein muss. In der Figur 5b ist das Kernelement 11 ein flaches, rechteckförmiges Element. Die Abstandsstruktur 20 hält die Hülle 30 auf Abstand. Im vorliegenden Beispiel ist eine zweite Hülle 50 vorgesehen, welche mit der ersten Hülle 30 in Kontakt steht. Im Unterschied zur Ausführungsform der Figur 5a ist ein Fügebereich nur bei der äußeren Hülle 50 vorgesehen, wodurch auf der Unterseite eine Fahne 60 entsteht, die zur Befestigung des Füllmaterials 13 genutzt werden kann. Die eine oder die beiden Hüllen 30, 50 sind aus einem flexiblen Material gefertigt, beispielsweise aus einem weichen Kunststoff, Textil oder einer Kombinationen daraus.

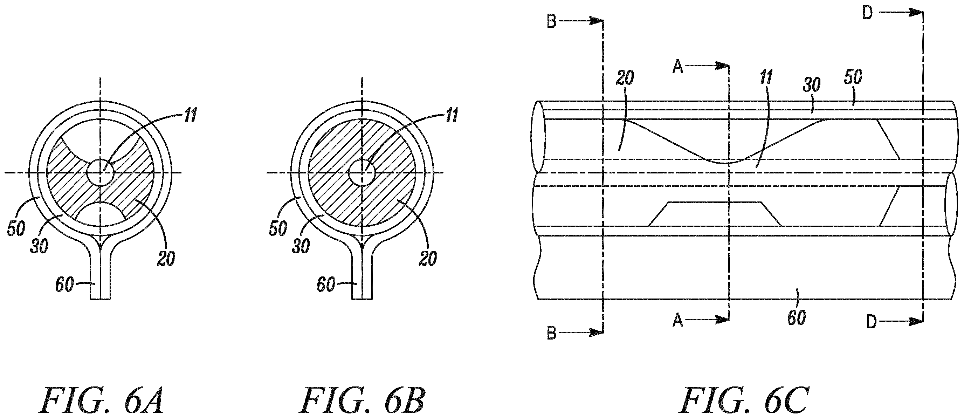

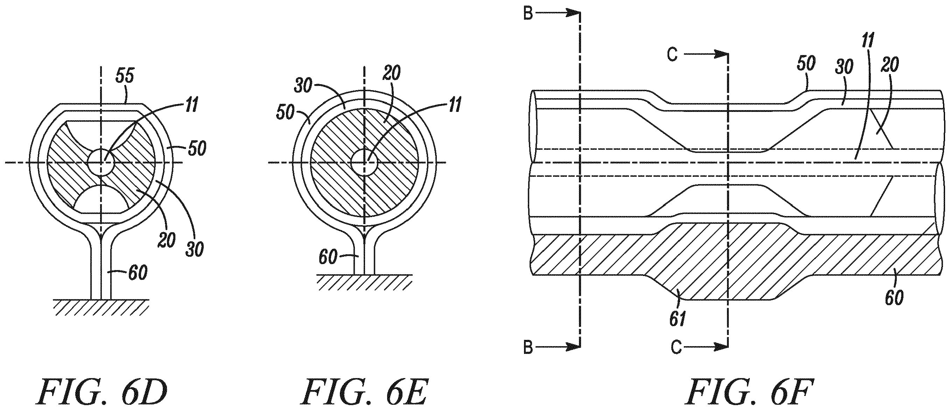

Die Figuren 6a bis 6f zeigen Abstandsstrukturen, deren Querschnitte senkrecht zur Erstreckungsrichtung entlang der Erstreckung des Füllmaterials 13 variieren. In Figur 6c ist hierzu eine Ansicht in Längsrichtung des Füllmaterials 13 gezeigt, wobei das Kernelement 11 von einer Abstandsstruktur 20 umgeben ist, die im Bereich des Schnitts A-A, der in Figur 6a dargestellt ist, nur abschnittsweise um das Kernelement 11 herum vorgesehen ist, während die Abstandsstruktur 20 im Schnitt B-B, der in Figur 6b dargestellt ist, das Kernelement 11 vollständig umgibt und mit der Hülle 30 in diesem Bereich vollständig in Kontakt steht. Durch die in axialer Richtung veränderliche Abstandsstruktur 20 wird ein veränderliches Umformverhalten des Füllmaterials 13 geschaffen. Darüber hinaus können dadurch besondere optische Effekte erzielt werden, wenn die Hüllen 30 und 50 zumindest teilweise transparent sind. Die Figur 6f zeigt ein anderes Ausführungsbeispiel, bei dem im Schnitt C-C eine teilweise Abflachung vorgenommen wurde, d.h. das Füllmaterial 13 ist gegenüber der Fügestelle 60 abgeflacht. Der Schnitt B-B entspricht wiederum dem der Figur 6b, d.h. das Füllmaterial ist ungefähr kreissymmetrisch vorgesehen, wobei die Abstandstruktur 20 konzentrisch um den Kern 11 und homogen vorgesehen ist. Darüber hinaus ist aus der Figur 6f ersichtlich, dass die Befestigungsfahne bzw. der Fügebereich 60 funktionalisiert beschnitten werden kann. Im vorliegenden Beispiel sind Befestigungsnasen 61 vorgesehen, die breiter ausgeführt sind, als die übrigen Bereiche der Fügebereiche 60.

Die hier besprochenen Fügebereiche 60 kommen dadurch zustande, dass eine oder mehrere Hüllen 30, 50 um die Abstandsstruktur 20 geschlagen werden und an einem oder an mehreren Enden zusammengeführt und gegebenenfalls miteinander vernäht, verklebt, verschweißt oder anderweitig miteinander befestigt werden, wodurch ein Bereich 60, 61 entsteht, der als Befestigungsfahne des Füllmaterials 13 verwendet werden kann. Mit Hilfe der Befestigungsfahne 60, 61 kann das Füllmaterial 13 beispielsweise in Öffnungen von Dekorelementen geklemmt, eingenäht oder eingeklebt werden.

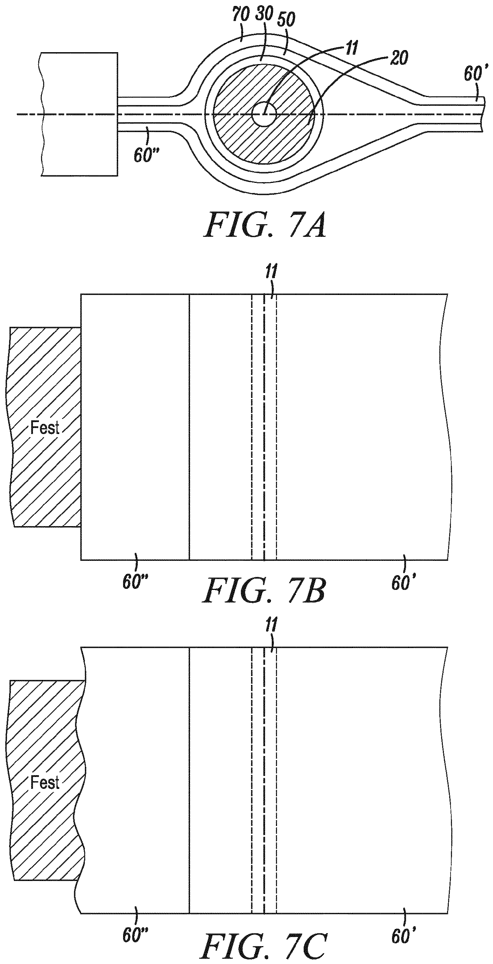

Alternative Fügevarianten der Hülle 30 bzw. der Hüllen 30, 50 sind in den Figuren 7a bis 7c gezeigt. In der Figur 7a ist der Kern 11 von einer in radialer Richtung homogenen Abstandsstruktur 20 umgeben, die wiederum von drei Hüllen 30, 50 und 70 umgeben ist. An einer Stelle 60' (rechte Seite in den Figuren) werden zwei Enden der äußeren Hülle 70 aufgeklappt. Auf der anderen Seite (linke Seite in den Figuren) werden die Hüllen 50 und 70 zusammengeführt und zusammengefügt. Die Figuren 7a bis 7c stellen beispielhaft dar, wie die Hüllen 30, 50, 70 in radialer Richtung fortgeführt werden können, um das Füllmaterial 13 zu gestalten und mit einfachen Mitteln an unterschiedliche Befestigungserfordernisse anzupassen. Auf der linken Seite in den Figuren 7a bis 7c kann der Fügebereich 60" fest an einer Anlage anliegen. Die Anlage kann dabei festpositioniert sein oder auch Bewegungen ausführen. Hierbei kann der Fügebereich 60" in axialer Richtung geradlinig sein, wie es in Figur 7b gezeigt ist, oder wellenförmig, wie es in Figur 7c gezeigt ist, oder anderweitig strukturiert. Der Fügebereich 60" kann während des Fügens eine feste Position einnehmen oder an der Anlage diskontinuierlich oder kontinuierlich vorbei bewegt werden. Bei der wellenartigen Vorbeiführung entsteht z.B. eine Ausführungsvariante, bei der das Füllmaterial in seinen Fortlauf über dem Dekor, auf Dekorebene, unterhalb des Dekors positioniert und fixiert sein kann. Eine gezielte Deformation des runden Füllmaterials nach dem Fügen in einen Dekorverbund kann durchaus gewollt sein.

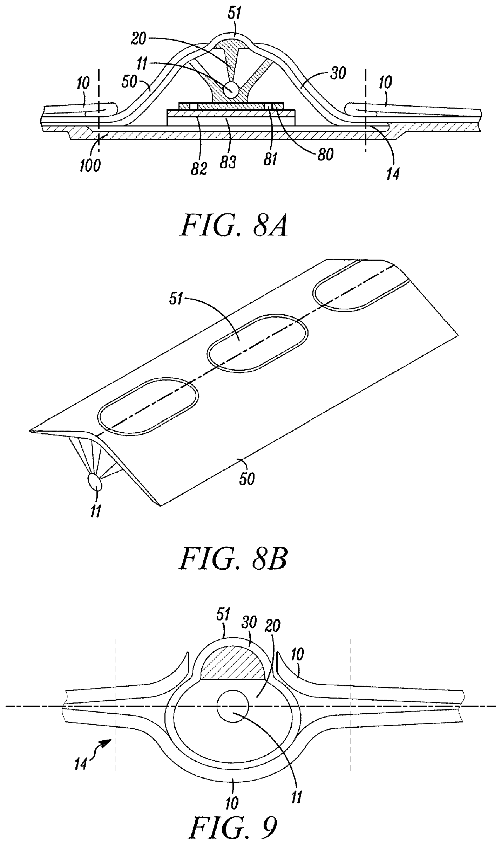

Figur 8a zeigt ein weiteres Ausführungsbeispiel, in dem das Kernelement 11 von der Abstandsstruktur 20 teilweise sternförmig umgeben ist, auf der wiederrum eine erste Hülle 30 und eine teilweise unterbrochene Hülle 50 liegt. Die erste Hülle 30 umgibt die Abstandsstruktur 20 vollständig, d.h. sie ist in Umfangsrichtung geschlossen, während die zweite Hülle 50 in axialer Richtung des Füllmaterials 13 Öffnungen 51 aufweist, wie es in Figur 8b gezeigt ist, und in radialer Richtung rechts und links vernäht ist. Das hier gezeigte Füllmaterial 13 ist auf einem formstabilen Träger 100 aufgebracht, auf dem die Dekorelemente 10 vorgesehen sind, in deren Dekoröffnung das hier gezeigte Füllmaterial 13 eingebracht ist. Das Füllmaterial 13 weist darüber hinaus eine plattenförmige OLED/Backlight-Lichtquelle 83 auf, auf der optional eine plattenförmige Lichtquelle 82 oder ein lichtbeeinflussendes Material 82 vorgesehen ist, auf der wiederum eine Streulage 80 gegebenenfalls mit Öffnungen 81 vorgesehen ist. Das in der Figur 8a dargestellte Füllmaterial 13 ist ein schlauchförmiges Gebilde, das die beiden Dekorseiten 10 miteinander verbindet, indem dieses zwischen Dekor und Träger eingenäht ist. Die äußere Hülle 50 kann als dekoratives Blendenmaterial vorgesehen sein, beispielsweise aus Naturfaser, Polymer, Glas, Holz, Leder, Folie, Papier, Metall, Textil, aus Faserverbundwerkstoffen, Verbundmaterial (z.B.Textil mit Polymer (z.B. beschichtet, eingebettet, Bico-Faser), der eine Kombination davon usw.. Im Unterschied zum Ausführungsbeispiel der Figur 9 ist der Schlauch in der Figur 8a mitvernäht.

Ein Beispiel, in dem das Füllmaterial 13 nicht direkt über die Hülle 50 mitvernäht ist, ist in der Figur 9 gezeigt. Darin ist das Füllmaterial 13 in einen Hohlraum zwischen zwei Dekorlagen 10, 10 eingebracht und gegebenenfalls verklebt. Die Hülle 30 in der Figur 9 kann ein elastisches Material sein, das ohne Krafteinfluss ein Rohrprofil annimmt, während die Hülle 30 in der Figur 8a ein weniger elastisches, flexibles Material ist.

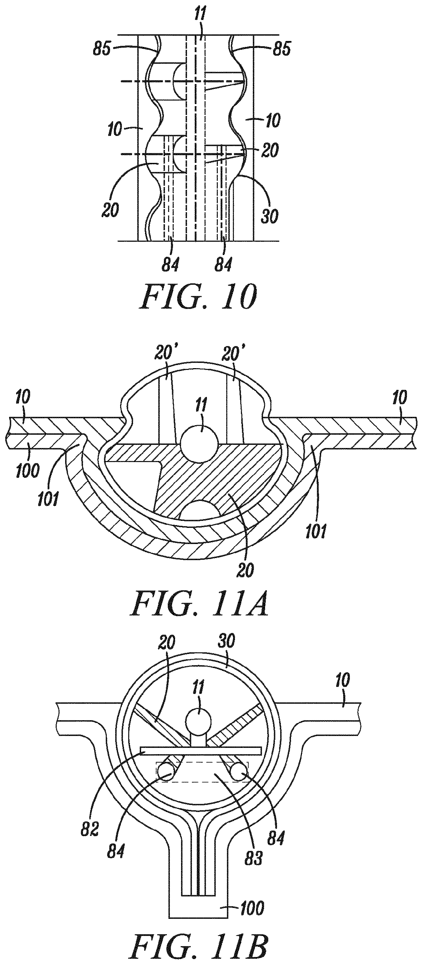

Figur 10 zeigt ein weiteres Ausführungsbeispiel, wobei das Füllmaterial 13 nicht im Querschnitt senkrecht zur Längsrichtung, sondern in einem Querschnitt in Längsrichtung gezeigt ist. Darin ist das Kernelement 11 enthalten, das von einer Abstandsstruktur 20 teilweise umgeben ist. Zusätzlich dazu sind Lichtleiter 84 oder LED's auf einer Leiterbahn (können auch aufgedruckt sein) in Längsrichtung vorgesehen, um weitere oder andere optische Effekte bereitzustellen. Im vorliegenden Beispiel ist ein wellenförmiger Verlauf zwischen dem Dekor 10 und dem Füllmaterial 13 vorgesehen. Zwischen der Hülle 30 und dem Dekor 10 können, wie es in Figur 10 angedeutet ist, funktionale Spalte 85 vorgesehen sein, etwa zur Belüftung oder für Lichteffekte.

Mögliche Querschnitte senkrecht zur Erstreckung des Füllmaterials 13, wie es in Figur 10 dargestellt ist, gehen aus den Figuren 11a und 11b hervor. Es sei darauf hingewiesen, dass die in den vielen verschiedenen Ausführungsformen gezeigten Merkmale nicht in der dargelegten Kombination auftreten müssen, sondern beliebig kombiniert werden können, sofern sich die Merkmale nicht widersprechen.

In der Figur 11a ist eine hinterschnittige Fixierung des Füllmaterials 13 gezeigt. Darin ist ein formstabiler Träger 100 vorgesehen, auf dem das Dekormaterial 10 aufgebracht ist. Das Füllmaterial 13 ist so in die Dekoröffnung eingebracht, dass die Abstandsstruktur 20 sich hinter vorstehenden Bereichen 101 des Trägers 100 verkrallt und/oder verklemmt, wodurch das Füllmaterial 13 auf einfache Art und Weise fixiert wird. Die Hülle des Füllmaterials kann dabei zumindest teilweise mit dem Dekor 10 verklebt sein. Optional sind Abstandsstrukturen 20' vorgesehen, welche die Form des Füllmaterials 13 auf der Dekorseite vorgeben. Das in der Figur 11a gezeigte Füllmaterial 13 ist somit in die Dekoröffnung eindrückbar und somit auf einfach Weise montierbar, wobei ein sicherer Halt gewährleistet ist. Ferner geht aus der Figur 11a hervor, dass die Dekoröffnung nicht dadurch zustande kommen muss, dass zwei Dekorelement bzw. Dekorschichten mit einem Abstand dazwischen vorgesehen sind, sondern, wie in dem hier gezeigten Fall, die Dekorschicht entlang des Trägers 100, der im Bereich der Füllmaterials 13 eine Vertiefung aufweise, auf der Unterseite des Füllmaterials 13 verläuft.

Der Schnitt der Figur 11b zeigt eine alternative Variante, in der in einem Nahtbereich zwischen zwei Dekorschichten 10 ein Füllmaterial 13 eingebracht ist. Das Füllmaterial 13 weist eine Abstandsstruktur 20 sowie zusätzliche Lichtleiter 84 und /oder LED's, eine flächige OLED 83 und ein Streuelement 84 auf. Die Überbrückung mit dem Füllmaterial 13 erfolgt kraftschlüssig, formschlüssig und/oder stoffschlüssig, wobei das Füllmaterial 13 mit dem Dekor 10 fest oder austauschbar verbunden ist.

Beispielsweise ist hier eine besonders bevorzugte Lichtvariante möglich, bei der etwa das Kernelement 11 einen Lichtleiter aufweist, der rotes Licht abstrahlt, eingebettet in gelbes Hintergrundlicht durch die Lichtquelle 83.

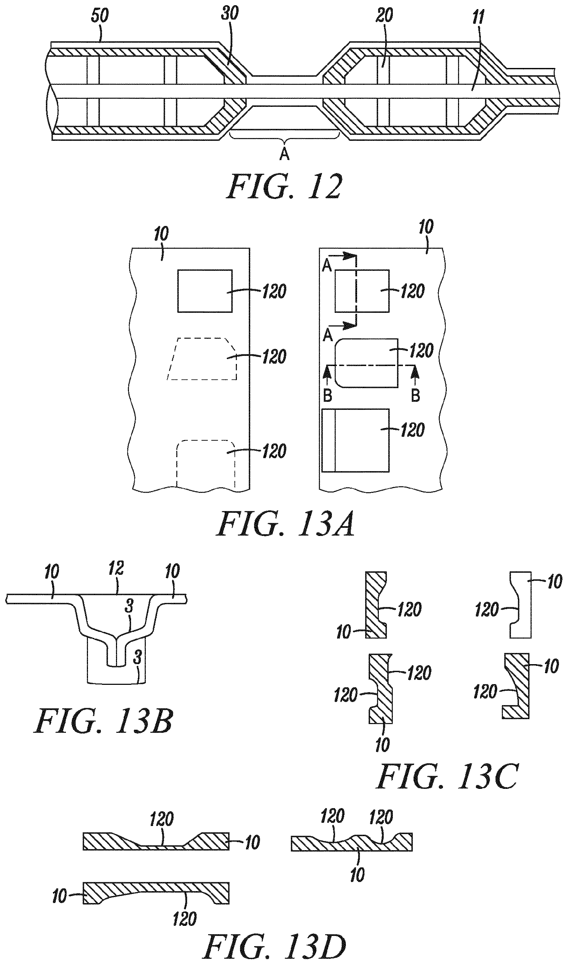

Aus der Figur 12 geht hervor, dass die Abstandsstruktur 20 nicht über die gesamte Länge des Füllmaterials 13 vorgesehen sein muss. Im Abschnitt A ist im vorliegenden Beispiel keine Abstandsstruktur 20 vorgesehen. Mit einem solchen veränderlichen Verlauf der Abstandsstruktur, auf die im Extremfall partiell gänzlich verzichtet wird, kann eine Faltenoptik im Dekor erzeugt werden, weil die Dekormaterialien aufgrund des sich veränderlichen Durchmessers des Füllmaterials 13 Falten werfen, die in der Figur nicht gezeigt sind.

Neben der Struktur des Füllmaterials 13, kann auch das Dekormaterial im Bereich des Füllmaterials 13 auf besondere Art und Weise strukturiert sein. Partielle Ausdünnungen oder Aussparungen an den Dekorzuschnitten können auf der Sichtseite und/oder der der Sichtseite abgewandten Seite, etwa der Schlechtseite des Dekors, vorgesehen sein.

Beispiele partieller Ausdünnungen 120 gehen aus den Figuren 13a bis 13d hervor. Hierbei zeigt die Figur 13a die Draufsicht auf zwei Dekorzuschnitte, die gemäß Figur 13b miteinander verbunden werden. Das Füllmaterial 13 wurde in der Darstellung weggelassen. Verschiedene Ausdünnungskonturen 120 gehen aus den Figuren 13c und 13d hervor, wobei der Achnitt A-A der Figur 13a in der Figur 13c gezeigt ist und der Schnitt B-B der Figur 13a in der Figur 13d gezeigt ist. Die gestrichelte Linie der Figur 13b zeigt an, wie die Aussparungen 120 sich auf die Dekoröffnung 12, in die das Füllmaterial 13 einzubringen ist, auswirken. Die Figuren 13c und 13d zeigen verschiedene beispielhafte Konturen von Aussparungen, wobei die linke Seite in der Figur 13c der Sichtseite des Dekormaterials 10 entspricht und die rechte Seite der Schlechtseite entspricht. In der Figur 13b entspricht die obere Seite der Vorderseite des Dekormaterials 10 und die untere Seite der Rückseite.

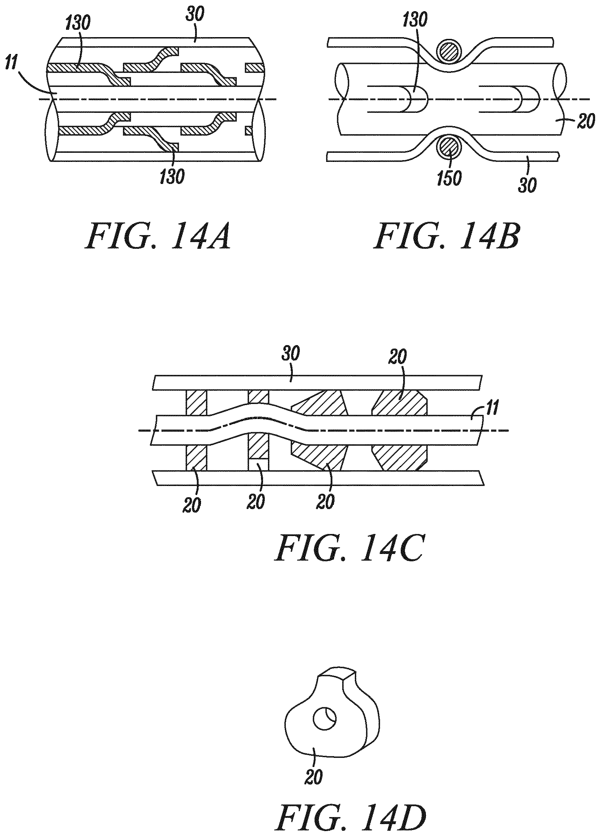

Weitere Ausgestaltungen des Füllmaterials 13 gehen aus den Figuren 14a bis 14d hervor. In der Figur 14a ist die Abstandsstruktur 20 aus einem Metallgitter mit laschenartigen Teilen 130 ausgeschnitten, die abwechselnd nach unten und nach oben gebogen sind, wodurch eine Beabstandung zwischen dem Kern 11 und der Hülle 30 erzielt wird. In der Figur 14b ist die Struktur in einer Draufsicht gezeigt. Der hülsenartige Abstandhalter 20 ist somit mit positiven und negativen Ausformungselementen 130 vorgesehen. Dadurch entstehen gleichzeitig Lichtöffnungen 131, wie es aus der Figur 14b ersichtlich ist. Zusätzlich dazu ist in der Figur 14b ein Umschlingungsmaterial 150 dargestellt, das die Hülle 30 in den hülsenförmigen Abstandshalter 20 drückt. Die Öffnungen 130 können hierbei als Vertiefungen bzw. Kerben zur Aufnahme der eingedrückten Hülse dienen. Dadurch entstehen "Baucheffekte". Die Hülle 30 des Füllmaterials kann nicht in Richtung Hohlraum/Luftzwischenbereich von Hülle zu Abstandshülle und/oder während der Herstellung Füllmaterial und/oder bei der Einarbeitung des Füllmaterials in das Dekor eingedrückt/verformt werden.

Alternative Abstandsstrukturen 20 sind in der Figur 14c gezeigt. Ein sternförmiger Abstandshalter 20 geht aus der Figur 14d hervor. Die Lage des Kerns kann zentral oder exzentrisch vorgesehen sein, wie es in Figur 14c angedeutet ist.

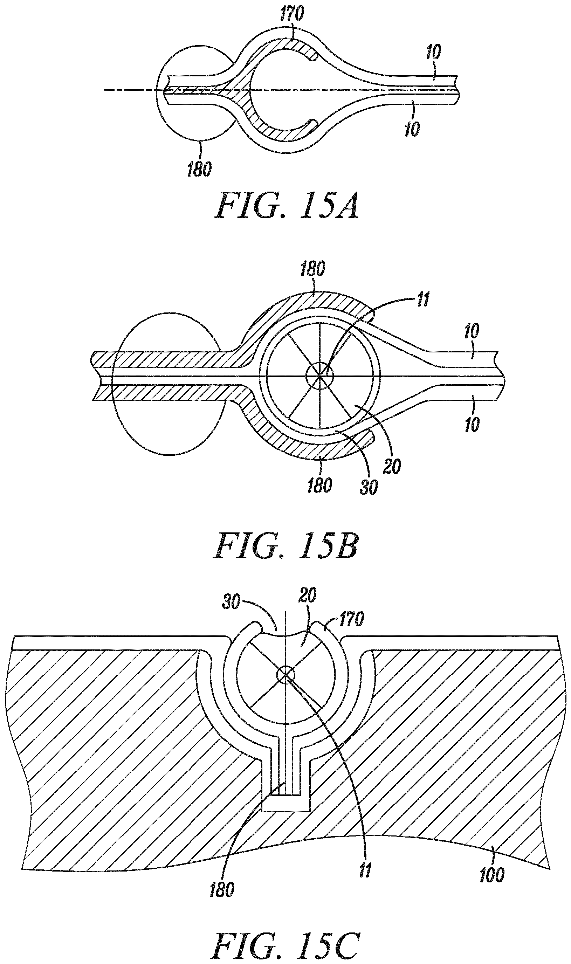

Aus den Figuren 15a bis 15c geht ein unsichtbares und sichtbares Haltesystem für die funktionale Überbrückung hervor. Das als Klammersystem 170 ausgebildete Haltesystem der Figur 15a weist ein flexibles gespreiztes Element auf, in das ein Füllmaterial 13 eingebracht und geklemmt werden kann. Während in der Figur 15a kein Füllmaterial 13 gezeigt ist, ist das Füllmaterial 13 in der Figur 15b eingebracht. Darüber hinaus unterscheiden sich die beiden Figuren darin, dass das Klammersystem 170 in der Figur 15a innen, d.h. innerhalb der Dekormaterialien 10 vorgesehen ist, während das Klammersystem 180 der Figur 15b außerhalb der Dekormaterialien 10 vorgesehen ist. Das Klammerprofil 180 kann hierbei unsichtbar sein oder als dekoratives Element fungieren. Die Fügung des Klammerprofils 170, 180 und der Dekorzuschnitte 10 kann mit oder ohne eingebrachtes Füllmaterial 13 erfolgen. Optional ist die funktionale Überbrückung, d.h. das Füllmaterial 13 zur Dekorseite hin austauschbar. Das Füllmaterial 13 kann auch ohne dekorative Zuschnitte z.B. in einen Spritzgussträger 100 mit und ohne Klammersystem oder in eine Formhaut eingebracht werden. Ein in einen formstabilen Träger 100 eingelassenes Klammersystem ist in der Figur 15c gezeigt.

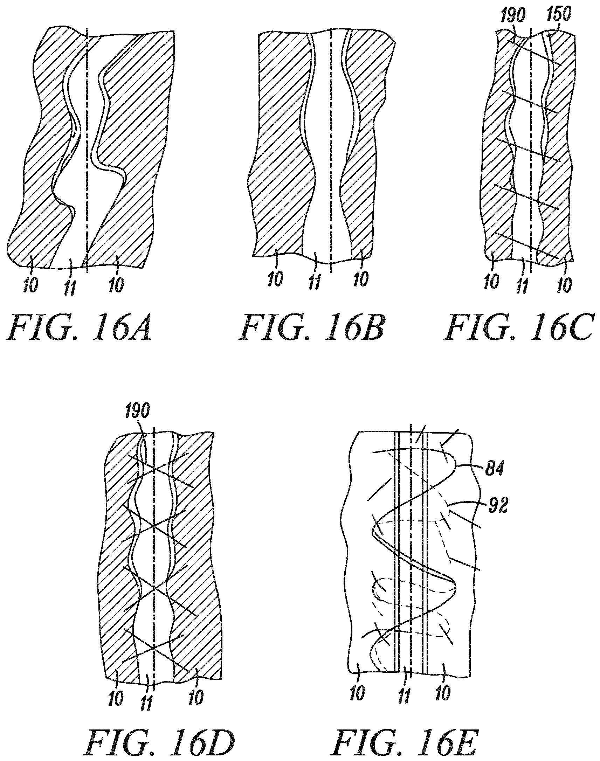

Draufsichten auf verschiedene "Bauchungsoptiken", teilweise mit Ziernähten, gehen aus den Figuren 16a bis 16e hervor. In den Figuren 16c und 16d wird der "Bauchungseffekt" durch eine Naht 190 erzielt. In der Figur 16e sind Fäden unterschiedlicher Spannung mit unterschiedlichen Bahnverläufen gezeigt, wodurch unterschiedliche "Bauchungscharakteristika" erzielt werden. Der Faden für die verschiedenen Bahnverläufe kann in die Ziernaht eingefädelt werden.

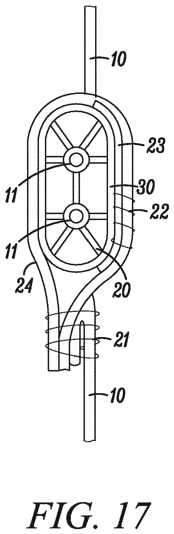

Eine weitere Ausführungsvariante eines Füllmaterials ist in der Figur 17 beschrieben. Das Füllmaterial 13 ist zwischen zwei Dekorelementen 10,101 angeordnet und beinhaltet zwei Kernelemente 11, die von einer Abstandsstruktur 20 umgeben sind. Die Abstandsstruktur 20 wird von einer Hülle 30 umschlossen. Weiterhin weist das Füllmaterial 13 eine Verbindungsschicht 24 auf, die die Hülle 30 vollständig umschließt. Die Enden 25 der Verbindungsschicht 24 sind hierbei übereinander angeordnet, so dass eine Art Schlaufe ausgebildet ist. Zur Verbindung des Füllmaterials 13 mit den Dekorelementen 10, sind die Enden 25 der Verbindungsschicht 24 mit einem Dekorelement 10 über die Naht 21 verbunden. Um eine reißfeste Verbindung zwischen Dekorelement 10 und Verbindungsschicht 24 sicher zu stellen, ist das Dekorelement im Bereich der Naht 21 umgeschlagen.

Die Verbindungsschicht 24 besteht darüber hinaus aus einem Textil, um die Nähfähigkeit weiterhin zu verbessern. Das zweite Dekorelement 101 liegt im Ausführungsbeispiel an dem Füllmaterial 13 an und ist mit diesem verklebt.

In die Verbindungsschicht 24 ist darüber hinaus eine Ziernaht 22 eingebracht. Innerhalb des Bereiches, in dem die Ziernaht 22 eingebracht ist, ist ein Schutzelement 23 angeordnet. Durch das Schutzelement 23 wird während des Nähprozesses der Ziernaht 23 sicher gestellt, dass weder die Abstandsstruktur 20 noch die Kernelemente 11 beschädigt werden. Das Schutzelement 23 bleibt auch nach dem Nähprozess im Füllmaterial 13 angeordnet. Sofern ein leuchtbares Kernelement 11 im Füllmaterial 13 vorgesehen ist, ist es daher bevorzugt, dass das Schutzelement 23 aus einem transparentem Material, beispielsweise einem Thermoplast oder Duroplast besteht. Im vorliegenden Ausführungsbeispiel verläuft die Ziernaht 23 nur innerhalb des Füllmaterials 13. Es ist jedoch ebenso möglich, dass die Ziernaht 22 sowohl in dem Füllmaterial 13 als auch in den Dekorelementen 10 verläuft. Dies weist den besonderen Vorteil auf, dass das Nahtbild trotz der Integration des Füllmaterials 13 in den Dekorelementen 10,101 unverändert bleibt.

Im Folgenden werden einige allgemeine Angaben zu den Strukturen und Materialien der Füllmaterialien gemacht, aus denen der Fachmann bei Bedarf wählen kann.

Das Kernelement bildet ein Merkmal zur Funktionalisierung des Füllmaterials. Es kann etwa ein Lichtleiter, eine andere Lichtquelle oder ein Träger für eine Lichtquelle sein. Letztere kann ein Profil sein, auf dem eine OLED Folie oder ein elektrischer Leiter mit LEDs aufgebracht ist. Diesbezüglich sind ebenfalls möglich: Teilfunktionsschichten, z.B. transparente Polymerflächen, Reflektorschichten, aufgebracht auf diesen Leiter. Das Kernelement kann alternativ eine Duftschnur, einen Duftstab oder einen Duftleiter aufweisen. Das Kernelement kann ein dekoratives Element sein, beispielsweise ein Profil mit Metalloberfläche mit/ohne Öffnungen. Das Kernelement kann ein mit Leder, Textil oder Folie kaschiertes Profil sein. Das Kernelement kann als Hohlprofil oder Vollprofil ausgebildet sein. Das Kernelement kann ein Gas, etwa Luft, oder eine Flüssigkeit führen. Das Kernelement kann ein Heizelement enthalten. Das Kernelement kann einen elektrischen Leiter enthalten.

Als Materialien für das Kernelement kommen beispielsweise Duroplaste, Elastomere, Thermoplaste, vernetzte Thermoplaste, Textilien, Gewebe, PE, PP, PVC, POR, Glas, Metall, PMMA, PC, COC, PES, Verbundmaterialien, Faserverbundmaterialien oder eine Kombination davon in Frage.

Der Abstandshalter hält das Kernelement zur Hülle auf Abstand. Der Abstandshalter ist darüber hinaus ein Konturgeber, d.h. die Geometrien des Abstandshalters können sich beispielsweise fortlaufend verändern. Öffnungen der Abstandsstruktur müssen nicht stetig mittig liegen, sondern können exzentrisch vorgesehen sein. Die Außenkontur kann Nuten, Ausnehmung, Stufen Vorsprünge usw. aufweisen. Die Außenkontur kann sich somit verändern. Die Hülle kann in einer Ausführungsart der Außenkontur der Abstandsstruktur folgen. Luftführungen mit einem oder mehreren Lufteinlässen/- Öffnungen und/oder Luftauslässen/-Öffnungen können vorgesehen sein. Die Abstandsstruktur kann auch fortlaufend vorgesehen sein und im Fortlauf den gleichen Querschnitt aufweisen.

Als Materialien für den Abstandshalter kommen beispielsweise Duroplaste, Elastomere, Thermoplaste, vernetzte Thermoplaste, PE, PP, PVC, PUR, Glas, Metall, PMMA, PC, COC, Silikone oder Holz, Verbundmaterialien, Faserverbundmaterialien oder eine Kombination davon in Frage.

Die Hülle kann einteilig oder mehrteilig, einschichtig oder mehrschichtig, als Hülse, als Hohlprofil, Schlauch usw. vorgesehen sein. Zueinander passende bzw. gefügte Schalenelemente können die Hülle genauso bilden, wie einstückige Materialien. Das im Wesentlichen flächige Material der Hülle wird um den Abstandshalter angebracht und an einer oder mehreren Stellen gegebenenfalls gefügt, sodass eine Hülle erzeugt wird. Das Fügen erfolgt beispielsweise an einer oder mehreren angewinkelten Flächen/Formteilgeometrien.

Weitere Eigenschaften der Abstandsstruktur können folgende sein, stichpunktartig:
- scheibenartig, hülsenartig, röhrchenartig, zylinderartig, propfenartig, als Hohlprofil, Hohlkörper, Vollprofil, dekorativ
- mit/ohne Ausnehmungen, mit/ohne Öffnungen, mit/ohne Spiegel/Reflexionseigenschaften
- mit/ohne Lichtleiteigenschaften, zumindest teilweise transparent/teiltransparent/transluzent,
- teiltransluzent, nicht transparent, Hohlprofile mit Erhöhungen (Noppen, aufgestellte Laschen usw.)

Favorisierte Materialien für den Abstandshalter, stichpunktartig:
- Folie, Thermoplast, Duroplast, Elastomer und/oder eine Kombination davon
- Leder, Holz, Naturfaser, Faserverstärkte Materialien, Verbundmaterialien kompakt oder geschäumte Materialien, Metall, Glas, Imitate der genannten Materialien, Textil, Vliesstoff, Gewebe, Gitter Armierungen oder eine Kombination davon.

Funktionen der Abstandsstruktur und des Kernelements, stichpunktartig:
- Kernelement kann ein oder mehrteilig sein
- Kernelement mit oder ohne angeformter Abstandsstruktur
- Kernelement mit oder ohne Abstandsstruktur kann versteifende und/oder flexible Eigenschaften besitzen
- Abstandsstruktur hält das Kernelement zur Hülle auf Abstand
- Der Abstandshalter trägt positioniert fixiert führt das Kernelement
- Kernelement kann sein: Lichtbeeinflussungselement, Lichtleiter, Lichtverteiler, Lichtquellenträger, Luftröhre zur Luftführung, Luftleitung zum Luftausstoß, zur Luftansaugung, eine Röhre, die auch für Flüssigkeitsführung, Flüssigkeitsleitung, Flüssigkeitsausstoß, Flüssigkeitsansaugung geeignet ist, Duft fördert, transportiert und verteilt, Duftpatronen, Duftstäbe, Duftpacks trägt, positioniert und fixiert
- Durch eine entsprechende Außen- und/oder Innenprofilierung des Abstandshalters kann die Hülle z.B. in die Vertiefungen des Abstandshalters bleibend hineingedrückt werden (z.B. durch Höhen und Tiefen in einer Nut eines Formteilträgers und/oder durch Klammerelemente und/oder eine Naht (Ziernaht, Funktionsnaht) und/oder Anklebung und/oder Anschweißen oder einer Kombination der aufgeführten Punkte
- Die Andrückung kann zusätzlich verstärkt werden indem z.B. die Hülle zusammengedrückt wird und die Hülle im komprimierten Zustand mit 2 Dekorzuschnitten vernäht wird. Es verbleibt somit ein teilweise optisch dekorativer Baucheffekt

Die Hülle kann ein Dekorelement, teilweises Dekorelement oder kein Dekorelement sein. Mögliche Ausführungsformen stichpunktartig:
- Ein- oder mehrschichtig, mit/ohne Lufteinschlüssen, mit/ohne Vertiefungen, mit/ohne Sacklöchern Hohlprofil, Mantel, Umhüllung, Ummantelung, Schlauch (Flachschlauch, Rundschlauch usw.) aus Textil, Gewebe, Gestricke, Gewirke, Textil Extrusion, durch Spritzguss, Extrusionsblasen, Coextrusion, Strangpressen, aus zusammengefügten Zuschnitten, Teilstücken, Schalen mit und ohne Öffnungen
- Optional können Öffnungen wahlweise geschlossen werden
- Transparent, transluzent, teiltransparent, nicht transparent
- Die Hülle kann geraden, kurvigen, mäanderförmigen komplexen Konturen folgen
- Dabei kann die Hülle aus einem flexiblen und/oder einem weniger flexiblen und/oder steifen Material gefertigt sein, oder aus einer Kombination der genannten Materialien
- Gleiche Wandstärke oder sich verändernde Wandstärke
- Gleiche oder sich verändernde Hüllenquerschnitte
- Mit und ohne Öffnungen
- Mit und ohne angeformte Abstandshalter (Stege, Rippen, Laschen usw.)
- Stummelnähte der Hülle können als Abstandshalter fungieren
- Die Hülle kann auch in Faltenoptik ausgeführt sein Favorisierte Materialien für die Hülle, stichpunktartig:
- Folie, Thermoplast, Duroplast, Elastomer und/oder eine Kombination davon
- Leder, Holz, Naturfaser, Faserverstärkte Materialien, Polymer, Verbundmaterialien kompakt oder geschäumte Materialien, Metall, Glas, Imitate der genannten Materialien, Textil, Vliesstoff, Gewebe, Gitter, Armierungen oder Stabilisierungsmaterial mit/ohne Polymeranteil

Mögliche Merkmale des Gesamtverbunds, stichpunktartig:
- Das Fügen von Kernelement, Abstandsstruktur und Hülle kann durch Schweißen, Nähen, Tackern, Nieten, Kleben, Pressen, Schäumen, Spritzen, Klemmen, Verasten, Aufstecken Durchziehen, Aufziehen, Einschieben, Drüberschieben oder einer Kombination davon bewerkstelligt werden
- Ein Lichtleiter kann an einem Abstandshalter durchgefädelt werden, bei zeitgleichem oder zeitversetztem Aufziehen der Hülle, kontinuierlich oder diskontinuierlich oder in einer Kombination
- Das Füllmaterial kann als Gesamtverbundelement als Einzelelement oder Teilverbundelement in Dekoröffnungen eingebracht werden
- Dekoröffnungen können an einem formstabilen Träger an einer Formhaut, Tiefziehhaut an einem Nähkleid an einem Zuschnitt oder an einer Kombination davon vorliegen
- Das Gesamtverbundelement, Einzelelement oder Teilverbundelement kann auch zuerst mit Dekorzuschnitten (z. B. Leder, Kunstleder, Textil) gefügt/verbunden werden, bevor der gefügte Gesamtverbund an einem formstabilen Träger angebracht wird
- Bevorzugt findet das Füllmaterial in Interieurteilen für Fahrzeuginnenräume Anwendung, beispielweise in der Instrumententafel, der Mittelkonsole, an Türinnenverkleidungen, im Dachhimmel, usw.
- Es können mehrere funktionale Überbrückungen nebeneinander und/oder übereinander mit oder ohne Kombination von weiteren Lichtquellen und/oder Lichtleitern angeordnet werden.
- austauschbar, montierbar (Einzelsegmente, gesamtheitlich)
- das Füllmaterial kann als Einzelsegmente bestehen, die adaptiv zu einen Gesamtfüllmaterial verbunden sind.
- Das Füllmaterial kann Anschlussbereich/e für verschiedene Verbraucher aufweisen.
   - Das Füllmaterial kann eine versteifende Funktion haben.
   - Das Füllmaterial kann an einem Bauteil so angeordnet werden, z.B. als Rahmenkonstruktion in einem Teilverbund oder einem Gesamtverbund (z.B. in Verbindung mit einen Formstabile Träger), so dass der Träger partiell ausgedünnt werden kann.
   - Füllmaterial in Verbindung mit einem Nähkleid, wobei das Füllmaterial als Positionier- und Fixierhilfe dient.
   - Das Füllmaterial kann eine haptische Funktion aufweisen, etwa weich sein (keine harten Kantenverläufe, Fahrer kann z.B. sein Bein an einer Mittelkonsole anlehnen, ohne schmerzende Eindrückungen zu bekommen), und/oder energieaufnehmende Funktionen aufweisen.
   - Das Füllmaterial kann bei Kraft-/Energiebeaufschlagung rückstellende Funktionen aufweisen.

## Patentansprüche

1. Interieurteil (1) mit einem oder mehreren Dekorelementen (10) und einer Dekoröffnung (12) in dem oder zwischen den Dekorelementen (10), wobei
in die Dekoröffnung (12) ein Füllmaterial (13) eingebracht ist, dessen Querschnitt verformbar ist und das ein Kernelement (11), eine Abstandsstruktur (20) und eine Hülle (30) aufweist, und
die Abstandsstruktur (20) das Kernelement (11) zumindest abschnittsweise umgibt, die Hülle (30) die Abstandsstruktur (20) zumindest abschnittsweise umgibt und die Abstandsstruktur (20) zumindest abschnittsweise einen Abstand zwischen Hülle (30) und Kernelement (11) festlegt, wobei das Kernelement (11) einen Lichtleiter aufweist, **dadurch gekennzeichnet, dass**
die Hülle (30) zumindest abschnittsweise transparent ist, sodass die Abstandsstruktur (20) zumindest teilweise von außen sichtbar ist, die Abstandsstruktur (20) zumindest teilweise transparent ist und die Hülle (30) den Kern zumindest abschnittsweise nicht konzentrisch umgibt.

2. Interieurteil (1) nach Anspruch 1, **dadurch gekennzeichnet, dass** das Kernelement (11) Lichtquellen und/oder einen elektrischen Leiter aufweist.

3. Interieurteil (1) nach Anspruch 2, **dadurch gekennzeichnet, dass** der Lichtleiter und/oder der elektrische Leiter mit einer Ummantelung versehen ist, die eine Befestigungsfahne aufweist, welche als Abstandsstruktur (20) fungiert.

4. Interieurteil (1) nach einem der vorhergehenden Ansprüche, **dadurch gekennzeichnet, dass** die Dekoröffnung (12) ein länglicher Spalt ist und das Füllmaterial (13) länglich ausgebildet ist, wobei der Querschnitt des Füllmaterials (13) senkrecht zur Längserstreckung verformbar ist.

5. Interieurteil (1) nach einem der vorhergehenden Ansprüche, **dadurch gekennzeichnet, dass** die Abstandsstruktur (20) lichtreflektierende Flächen aufweist.

6. Interieurteil (1) nach einem der vorhergehenden Ansprüche, **dadurch gekennzeichnet, dass** die Abstandsstruktur (20) ein weiches Kunststoffmaterial aufweist.

7. Interieurteil (1) nach einem der vorhergehenden Ansprüche, **dadurch gekennzeichnet, dass** das Füllmaterial (13) fluchtend mit der Ebene des bzw. der Dekorelemente (10) oder sichtseitig vorstehend in die Dekoröffnung (12) eingebracht ist.

8. Interieurteil (1) nach einem der vorhergehenden Ansprüche, **dadurch gekennzeichnet, dass** eines oder mehrere der Dekorelemente (10) eine Dekorschicht aus Leder, Kunstleder oder einem lederähnlichen Material aufweist.

9. Interieurteil (1) nach einem der vorhergehenden Ansprüche, **dadurch gekennzeichnet, dass** das Kernelement (11) einen Schlauch aufweist oder ein Schlauch ist.

10. Interieurteil (1) nach einem der vorhergehenden Ansprüche, **dadurch gekennzeichnet, dass** ein Haltesystem (170, 180) aus einem elastischen Material vorgesehen ist, das in der Dekoröffnung (12) vorgesehen und mit dem Dekor gefügt ist, wobei das Füllmaterial (13) von dem Haltesystem (170, 180) geklemmt wird.

11. Interieurteil (1) nach einem der vorhergehenden Ansprüche, **dadurch gekennzeichnet, dass** das Füllmaterial (13) entlang seiner Längserstreckung einen veränderlichen Querschnitt aufweist.

12. Interieurteil (1) nach einem der vorhergehenden Ansprüche, **dadurch gekennzeichnet, dass** die Abstandsstruktur (20) eine Metallhülse mit Öffnungen (130) aufweist oder eine Metallhülse mit Öffnungen ist.

13. Interieurteil (1) nach einem der vorhergehenden Ansprüche, **dadurch gekennzeichnet, dass** zumindest die Abstandsstruktur (20) und/oder die Hülle (30) und/oder das Kernelement (11) aus einem glasklaren Material gefertigt ist.

14. Interieurteil (1) nach einem der vorhergehenden Ansprüche, **dadurch gekennzeichnet, dass** die Abstandsstruktur (20) zumindest abschnittsweise einen Abstand zwischen Hülle (30) und Kernelement (11) von wenigstens 0,5 mm, vorzugsweise 1 mm festlegt.

## Claims

1. Interior part (1) with one or more decorative elements (10) and a decorative opening (12) in the or in between the decorative elements (10), wherein a filling material (13) whose cross section is deformable and which has a core element (11), a spacing structure (20) and an envelope (30) is introduced into the decorative opening (12), and the spacing structure (20) surrounds the core element (11) at least in certain portions, the envelope (30) surrounds the spacing structure (20) at least in certain portions and the spacing structure (20) determines at least in certain portions a spacing between the envelope (30) and core element (11), wherein the core element (11) has a light conductor, **characterized in that** the envelope (30) is transparent at least in certain portions, with the result that the spacing structure (20) is at least partially visible from outside, the spacing structure (20) is at least partially transparent and the envelope (30) does not surround the core concentrically at least in certain portions.

2. Interior part (1) according to Claim 1, **characterized in that** the core element (11) has light sources and/or an electrical conductor.

3. Interior part (1) according to Claim 2, **characterized in that** the light conductor and/or the electrical conductor are/is provided with a sheathing which has a fastening lug which functions as a spacing structure (20).

4. Interior part (1) according to one of the preceding claims, **characterized in that** the decorative opening (12) is an elongate gap and the filling material (13) is of elongate form, wherein the cross section of the filling material (13) is deformable perpendicular to the longitudinal extent.

5. Interior part (1) according to one of the preceding claims, **characterized in that** the spacing structure (20) has light-reflecting surfaces.

6. Interior part (1) according to one of the preceding claims, **characterized in that** the spacing structure (20) has a soft plastic material.

7. Interior part (1) according to one of the preceding claims, **characterized in that** the filling material (13) is introduced into the decorative opening (12) so as to be aligned with the plane of the decorative element or elements (10) or to project on the visible side.

8. Interior part (1) according to one of the preceding claims, **characterized in that** one or more of the decorative elements (10) has a decorative layer of leather, synthetic leather or a leather-like material.

9. Interior part (1) according to one of the preceding claims, **characterized in that** the core element (11) has a hose or is a hose.

10. Interior part (1) according to one of the preceding claims, **characterized in that** a holding system (170, 180) of an elastic material is provided, which is provided in the decorative opening (12) and joined to the decoration, wherein the filling material (13) is clamped by the holding system (170, 180).

11. Interior part (1) according to one of the preceding claims, **characterized in that** the filling material (13) has a variable cross section along its longitudinal extent.

12. Interior part (1) according to one of the preceding claims, **characterized in that** the spacing structure (20) has a metal sleeve with openings (130) or is a metal sleeve with openings.

13. Interior part (1) according to one of the preceding claims, **characterized in that** at least the spacing structure (20) and/or the envelope (30) and/or the core element (11) are/is manufactured from a glass-clear material.

14. Interior part (1) according to one of the preceding claims, **characterized in that** the spacing structure (20) determines at least in certain portions a spacing between the envelope (30) and core element (11) of at least 0.5 mm, preferably 1 mm.

## Revendications

1. Pièce intérieure (1) comprenant un ou plusieurs éléments décoratifs (10) et une ouverture décorative (12) dans l'élément décoratif ou entre les éléments décoratifs (10),
un matériau de remplissage (13) étant introduit dans l'ouverture décorative (12), dont la section transversale peut être déformée et qui présente un élément de noyau (11), une structure d'espacement (20) et une enveloppe (30), et
la structure d'espacement (20) entourant au moins en partie l'élément de noyau (11), l'enveloppe (30) entourant au moins en partie la structure d'espacement (20) et la structure d'espacement (20) fixant au moins en partie une distance entre l'enveloppe (30) et l'élément de noyau (11), l'élément de noyau (11) présentant un guide de lumière,
**caractérisée en ce que**
l'enveloppe (30) est au moins en partie transparente, de sorte que la structure d'espacement (20) soit au moins en partie visible depuis l'extérieur, la structure d'espacement (20) est au moins en partie transparente et l'enveloppe (30) entoure au moins en partie le noyau de manière non concentrique.

2. Pièce intérieure (1) selon la revendication 1, **caractérisée en ce que** l'élément de noyau (11) présente des sources de lumière et/ou un conducteur électrique.

3. Pièce intérieure (1) selon la revendication 2, **caractérisée en ce que** le guide de lumière et/ou le conducteur électrique sont pourvus d'un gainage qui présente une langue de fixation qui sert de structure d'espacement (20).

4. Pièce intérieure (1) selon l'une quelconque des revendications précédentes, **caractérisée en ce que** l'ouverture décorative (12) est une fente allongée et le matériau de remplissage (13) est réalisé sous forme allongée, la section transversale du matériau de remplissage (13) pouvant être déformée perpendiculairement à son étendue longitudinale.

5. Pièce intérieure (1) selon l'une quelconque des revendications précédentes, **caractérisée en ce que** la structure d'espacement (20) présente des surfaces réfléchissant la lumière.

6. Pièce intérieure (1) selon l'une quelconque des revendications précédentes, **caractérisée en ce que** la structure d'espacement (20) présente un matériau en plastique souple.

7. Pièce intérieure (1) selon l'une quelconque des revendications précédentes, **caractérisée en ce que** le matériau de remplissage (13) est introduit en affleurement avec le plan du ou des éléments décoratifs (10) ou de manière saillante du côté visible dans l'ouverture décorative (12).

8. Pièce intérieure (1) selon l'une quelconque des revendications précédentes, **caractérisée en ce qu'**un ou plusieurs des éléments décoratifs (10) présente une couche décorative en cuir, en cuir synthétique ou en un matériau semblable au cuir.

9. Pièce intérieure (1) selon l'une quelconque des revendications précédentes, **caractérisée en ce que** l'élément de noyau (11) présente un tuyau ou est un tuyau.

10. Pièce intérieure (1) selon l'une quelconque des revendications précédentes, **caractérisée en ce qu'**un système de retenue (170, 180) constitué d'un matériau élastique est prévu, lequel est prévu dans l'ouverture décorative (12) et est assemblé au décor, le matériau de remplissage (13) étant serré par le système de retenue (170, 180).

11. Pièce intérieure (1) selon l'une quelconque des revendications précédentes, **caractérisée en ce que** le matériau de remplissage (13) présente le long de son étendue longitudinale une section transversale variable.

12. Pièce intérieure (1) selon l'une quelconque des revendications précédentes, **caractérisée en ce que** la structure d'espacement (20) présente une douille métallique avec des ouvertures (130) ou est une douille métallique avec des ouvertures.

13. Pièce intérieure (1) selon l'une quelconque des revendications précédentes, **caractérisée en ce qu'**au moins la structure d'espacement (20) et/ou l'enveloppe (30) et/ou l'élément de noyau (11) sont fabriqués en un matériau transparent comme du verre.

14. Pièce intérieure (1) selon l'une quelconque des revendications précédentes, **caractérisée en ce que** la structure d'espacement (20) établit au moins en partie une distance entre l'enveloppe (30) et l'élément de noyau (11) d'au moins 0,5 mm, de préférence de 1 mm.
